# EUROPEAN PATENT SPECIFICATION

(11) **EP 4 096 306 B1**
(45) Date of publication and mention of the grant of the patent: **17.06.2026**
(21) Application number: 20915798.1
(22) Date of filing: 24.01.2020
(51) Int. Cl.: H04W 48/08

(54) **TERMINAL AND BASE STATION**
ENDGERÄT UND BASISSTATION
TERMINAL ET STATION DE BASE

(43) Date of publication of application: 30.11.2022
(73) Proprietor: NTT DOCOMO, INC., Chiyoda-Ku Tokyo 100-6150 (JP)
(72) Inventor: HARADA, Hiroki, Tokyo 100-6150 (JP); KURITA, Daisuke, Tokyo 100-6150 (JP); NAGATA, Satoshi, Tokyo 100-6150 (JP); WANG, Jing, Beijing, 100190 (CN)
(74) Representative: Hoffmann Eitle
(86) International application number: PCT/JP2020/002620
(87) International publication number: WO 2021/149255

(56) References cited:
- US-A1- 2019 223 084
- US-A1- 2019 306 832
- "3rd Generation Partnership Project; Technical Specification Group Radio Access Network; Study on new radio access technology: Radio Frequency (RF) and co-existence aspects (Release 14)", 3GPP STANDARD ; TECHNICAL REPORT ; 3GPP TR 38.803, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG4, no. V14.2.0, 28 September 2017 (2017-09-28), pages 1 - 205, XP051337408
- vol. TSG RAN, no. Sitges, Spain, 11 December 2019 (2019-12-11), XP051839162, Retrieved from the Internet <URL:https://ftp.3gpp.org/tsg_ran/TSG_RAN/TSGR_86/Report/draft_MeetingReport_RAN_86_191211_end_of_Wed.zip draft_MeetingReport_RAN_86_191211_end_of_Wed.rtf> [retrieved on 20191211]
- QUALCOMM INCORPORATED: "Channel Access for NR Unlicensed", 3GPP DRAFT; R2-1806891_CHANNEL_ACCESS_NRU, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Busan, Korea; 20180521 - 20180525, 11 May 2018 (2018-05-11), Mobile Competence Centre ; 650, route des Lucioles ; F-06921 Sophia-Antipolis Cedex ; France, XP051464463
- INTEL CORPORATION: "Initial access signals/channels for NR-unlicensed", 3GPP DRAFT; R1-1908621 - INTEL - INITIAL ACCESS CHANNELS FOR NR-U, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Prague, Czech Republic; 20190826 - 20190830, 17 August 2019 (2019-08-17), Mobile Competence Centre ; 650, route des Lucioles ; F-06921 Sophia-Antipolis Cedex ; France, XP051765229
- SHARP: "Initial access procedure for NR-U", 3GPP DRAFT; R1-1912765, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Reno, USA; 20191118 - 20191122, 9 November 2019 (2019-11-09), Mobile Competence Centre ; 650, route des Lucioles ; F-06921 Sophia-Antipolis Cedex ; France, XP051823583

## Description

### TECHNICAL FIELD

The present invention relates to a terminal and a base station in a radio communication system.

### BACKGROUND ART

In new ratio (NR) of Release 15 and NR of Release 16 of a third generation partnership project (3GPP), a frequency band up to the upper limit of 52.6 GHz is the target. With regard to extension of NR to a frequency band higher than or equal to 52.6 GHz, in Release 16, a study item exists at a technical specification group radio access network (TSG RAN) level in which various regulations, use cases, requirements, and the like are to be studied. The study of the study item has been completed in December 2019, and in Release 17, a study item and a work item for actually extending a technical specification to 52.6 GHz or higher have been agreed.

In the study item in Release 16, as an NR frequency band, extension from 52.6 GHz to 114.25 GHz was assumed, but in Release 17, time for the study is limited, and, thus, it is assumed that the frequency band to be studied is limited to a range from 52.6 GHz to 71 GHz. In addition, when extending the NR frequency band from 52.6 GHz to 71 GHz, it is assumed that extension is carried out on the basis of design of current NR frequency range 2 (FR2). US 2019/223084 A1 discusses an apparatus that may receive a master information block and a synchronization signal (SS) block on a PBCH. The MIB may indicate an allocation associated with a CORESET. The apparatus may receive remaining minimum system information (RMSI) configuration information carried in the CORESET based on the allocation associated with the CORESET. The apparatus may determine a position associated with a downlink data channel based on a first value indicated by one of the MIB or the SS block in the PBCH and based on a second value indicated by the RMSI configuration information. The apparatus may receive data carried on the downlink data channel based on the position associated with the downlink data channel.
US 2019/306832 A1 discusses a UE in a wireless communication system that comprises a transceiver configured to receive SS/PBCH block over downlink channels using a set of parameters based on an operation mode. The operation mode is configured for the SS/PBCH block as a first operation mode in which the SS/PBCH block is used on a LAA Scell or a second operation mode in which the SS/PBCH block is at least used on a Pcell. The set of parameters is configured as a first set of parameters for the SS/PBCH block when the operation mode of the SS/PBCH block is configured as the first operation mode or a second set of parameters for the SS/PBCH block when the operation mode of the SS/PBCH block is configured as the second operation mode. The first and second set of parameters include different information each other.

### Related Art Document

### [Non-Patent Document]

Non-Patent Document 1: 3GPP TSG RAN Meeting #86, RP-193229, Sitges, Spain, December 9 to 12, 2019
Non-Patent Document 2: 3GPP TS 38.101-2 V15.8.0 (2019-12)
Non-Patent Document 3: 3GPP TSG-RAN4 Meeting #92bis, R4-1912870, Chongqing, China, 14 to 18 Oct, 2019
Non-Patent Document 4: 3GPP TSG-RAN4 Meeting #93, R4-1916167, Reno, United States, 18th to 22nd November, 2019
Non-Patent Document 5: 3GPP TSG-RAN4 Meeting #92bis, R4-1912982, Chongqing, China, 14th to 18th October 2019
Non-Patent Document 6: 3GPP TSG-RAN4 Meeting #93, R4-1915982, Reno, US, November 18 to 22, 2019
Non-Patent Document 7: 3GPP TS 38.331 V15.8.0 (2019-12)
Non-Patent Document 8: 3GPP TS 38.213 V15.8.0 (2019-12)

### SUMMARY OF THE INVENTION

### [PROBLEM TO BE SOLVED BY THE INVENTION]

A frequency band of 52.6 GHz to 71 GHz includes an unlicensed band of 60 GHz, and, thus, there is a possibility that the NR system may share the unlicensed band of 60 GHz with another system (for example, WiGig (IEEE802.11ad/ay)).

There is a need for a technology that allows a terminal and a base station to appropriately perform communication in an unlicensed band included in the high frequency band higher than or equal to the frequency band of FR2 of NR.

### [MEANS FOR SOLVING THE PROBLEM]

The mentioned problems are solved by the subject-matter of the independent claims. Further preferred embodiments are defined in the dependent claims. Subject matter discussed throughout the following but not falling under the scope of the claims does not form part of the invention.

### [ADVANTAGE OF THE INVENTION]

According to an embodiment, there is provided a technology that allows a terminal and a base station to perform communication in an unlicensed band included in a high frequency band higher than or equal to a frequency band of the FR2 of NR.

### BRIEF DESCRIPTION OF DRAWINGS

FIG. 1 is a configuration diagram of a communication system in an embodiment;
FIG. 2 is a diagram illustrating an example of extension of a frequency band of NR;
FIG. 3 is a diagram illustrating an example of a definition of a channel raster;
FIG. 4 is a diagram illustrating an example of a definition of a synchronization raster;
FIG. 5 is a diagram illustrating an example of a CORESET#0 configuration table that is newly added for a frequency band of NR-U;
FIG. 6 is a diagram illustrating an example of the CORESET#0 configuration table that is newly added for the frequency band of the NR-U;
FIG. 7 is a diagram illustrating an example of a WiGig channel;
FIG. 8 is a diagram illustrating an example of selecting a channel raster point;
FIG. 9 is a diagram illustrating an example of selecting the channel raster point;
FIG. 10 is a diagram illustrating an example of selecting a synchronization raster point;
FIG. 11 is a diagram illustrating an example of Pattern 1 in which SSB and CORESET#0 are time-division multiplexed;
FIG. 12 is a diagram illustrating an example of Pattern 2 in which the SSB and the CORESET#0 are time and frequency-division multiplexed;
FIG. 13 is a diagram illustrating an example of Pattern 3 in which the CORESET#0 and PDSCH (SIB1) are frequency-division multiplexed with an SSB;
FIG. 14 is a diagram illustrating an example of a new CORESET#0 configuration table;
FIG. 15 is a diagram illustrating an example of a functional configuration of a terminal;
FIG. 16 is a diagram illustrating an example of a functional configuration of a base station; and
FIG. 17 is a diagram illustrating an example of a hardware configuration of the terminal and the base station.

### [EMBODIMENTS OF THE INVENTION]

Hereinafter, an embodiment of the invention will be described with reference to the accompanying drawings. Note that, the following embodiment is illustrative only, and embodiments to which the invention is applied are not limited to the following embodiments.

It is assumed that a radio communication system in the following embodiments basically conform to NR, but this is merely an example, and the radio communication system in the embodiments may partially or entirely conform to a radio communication system (for example, LTE) other than the NR.

### (Overall System Configuration)

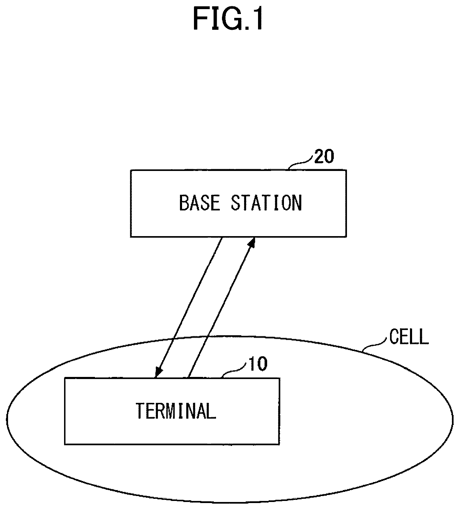

Fig. 1 illustrates a configuration diagram of the radio communication system according to the embodiments. As illustrated in Fig. 1, the radio communication system according to the embodiments includes a terminal 10 and a base station 20. In Fig. 1, one piece of the terminal 10 and one piece of the base station 20 are illustrated, but this is an example, and a plurality of the terminals 10 and a plurality of the base stations 20 may be provided.

The terminal 10 is a communication device such as a smart phone, a portable telephone, a tablet, a wearable terminal, and a communication module for machine-to-machine (M2M) which have a radio communication function. The terminal 10 receives a control signal or data from the base station 20 in DL, and transmits the control signal or the data to the base station 20 in UL to use various communication services provided by the radio communication system. For example, a channel transmitted from the terminal 10 includes a physical uplink control channel (PUCCH) and a physical uplink shared channel (PUSCH). In addition, the terminal 10 may be referred to as a UE, and the base station 20 may be referred to as a gNB.

In the embodiments, a duplex method may be a time division duplex (TDD) method or a frequency division duplex (FDD) method.

In addition, in the embodiment, with regard to description of "a radio parameter or the like is configured", a predetermined value may be pre-configured, or may be configured on the basis of a radio parameter indicated by the base station 20 or the terminal 10.

The base station 20 is a communication device that provides one or more cells and that performs radio communication with the terminal 10. Physical resources of a radio signal are defined in a time domain and a frequency domain, the time domain may be defined by a number of OFDM symbols, and the frequency domain may be defined by a number of sub-carriers or a number of resource blocks. The base station 20 transmits synchronization signals and system information to the terminal 10. The synchronization signals are, for example, NR-PSS and NR-SSS. A part of the system information is transmitted, for example, by NR-PBCH, and is also called broadcast information. The synchronization signal and broadcast information may be periodically transmitted as an SS block (SS/PBCH block) formed of a predetermined number of OFDM symbols. For example, the base station 20 transmits a control signal or data in Downlink (DL) to the terminal 10 and receives a control signal or data in Uplink (UL) from the terminal 10. Both the base station 20 and the terminal 10 are capable of beam forming to transmit and receive signals. For example, a reference signal transmitted from the base station 20 includes a Channel State Information Reference Signal (CSI-RS) and a channel transmitted from the base station 20 includes a Physical Downlink Control Channel (PDCCH) and a Physical Downlink Shared Channel (PDSCH).

### (PDCCH-ConfigSIB1 in Release 15 NR)

The PDCCH-ConfigSIB1 in the Release 15 NR is an Information Element (IE) included in a Master Information Block (MIB).

PDCCH-ConfigSIB1 includes two IEs, controlResourceSetZero and searchSpaceZero. The controlResourceSetZero and the searchSpaceZero are four-bit parameters for indicating one integer value in a range from 0 to 15, respectively.

During a cell search, the terminal 10 derives a number of resource blocks, a frequency position with respect to the SS block, and a number of symbols of a CORESET from the four most signal bits (MSB) of the PDCCH-ConfigSIB1, if it determines, based on the MIB, that there is a Control-Resource set (CORESET) of the Type 0-PDCCH Common Search Space (CSS). Here, the four MSBs of PDCCH-ConfigSIB1 correspond to the controlResourceSetZero. In addition, the terminal 10 derives PDCCH monitoring occasions from the four lease signal bits (LSB) of the PDCCH-ConfigSIB1. Here, the four LSBs of PDCCH-ConfigSIB1 correspond to searchSpaceZero.

### (controlResourceSetZero, CORESET#0)

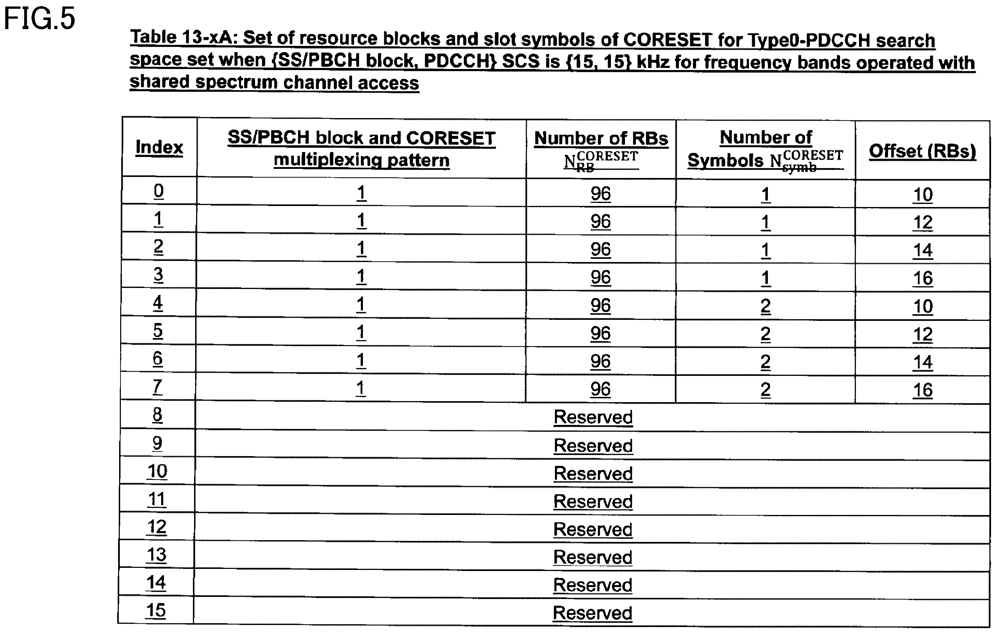

Fig. 5 is a diagram illustrating an example of a CORESET#0 configuration table newly added for a frequency band of NR-U. For example, when SCS of the SS/PBCH block and PDCCH is 15 kHz, the terminal 10 interprets the four bits of the controlResourceSetZero based on the table shown in FIG. 5. The 4-bit value corresponds to the Index in the table in Fig. 5, and the Index takes one integer value in a range from 0 to 15. The terminal 10 configures a SS/PBCH block (which may be referred to as an SS/PBCH block, an SS block, or an SSB) and Control-resource set (CORESET) multiplexing pattern, a number of resource blocks (RB) of CORESET, a number of symbols of CORESET, and a resource block level offset between the SS/PBCH block and the CORESET, based on the values indicated by the Index, as illustrated in the table of FIG. 5.

### (Extension of NR to frequency band higher than or equal to 52.6 GHz)

Under the new radio (NR) Release 15 and the NR Release 16 of the third generation partnership project (3GPP), a frequency band up to the upper limit of 52.6 GHz is the target. With regard to extension of the NR to a frequency band higher than or equal to 52.6 GHz, in Release 16, a study item exists at a technical specification group radio access network (TSG RAN) level in which various regulations, use cases, requirements, and the like are examined. The study of the study item was completed in December 2019, and in Release 17, a study item and a work item for actually extending a technical specification to 52.6 GHz or higher have been agreed.

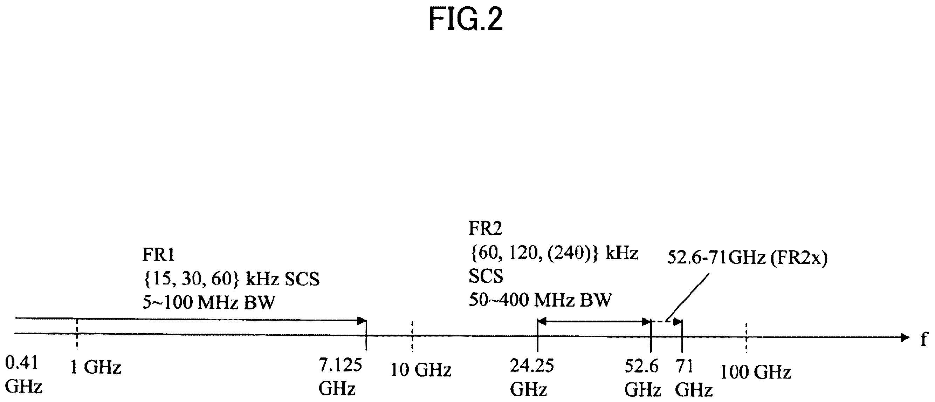

In the study items in Release 16, as an NR frequency band, extension from 52.6 GHz to 114.25 GHz was assumed, but in Release 17, time for the study is limited, and, thus, it is assumed that the frequency band to be studied is limited to a range from 52.6 GHz to 71 GHz as illustrated in Fig. 2. In addition, when extending the NR frequency band from 52.6 GHz to 71 GHz, it is assumed that extension is carried out on the basis of design of current NR frequency range 2 (FR2). The reason for this is because it is assumed that a considerable amount of time will be spent to conduct an examination on a new wave form.

In addition, the reason for limiting the frequency band to be studied to the range from 52.6 GHz to 71 GHz is as follows. For example, in a frequency band of 71 GHz or lower, a frequency band of 54 GHz to 71 GHz already exists as an unlicensed frequency band available for use in each country. In addition, at a word radio communication conference 2019 (WRC-2019), as a candidate for new frequency band for international mobile telecommunication (IMT), a frequency band from 66 GHz to 71 GHz is the highest frequency band. Thus, no frequency band higher than or equal to 71 GHz is available for use as a licensed band.

Current NR frequency bands include frequency range 1 (FR1), which corresponds to a frequency band of 410 MHz to 7.125 GHz, and FR2, which corresponds to a frequency band of 24.25 GHz to 52.6 GHz.

Note that, with regard to the frequency band of 52.6 GHz to 71 GHz, the definition of the current FR2 (frequency band of 24.25 GHz to 52.6 GHz) may be modified, and the frequency band may be included in a modified FR2, or may be defined as a new frequency range (FR) separately from the FR2.

### (Objectives of Work Item)

### (RAN1: Feature of Physical Layer)

One or a plurality of new numerologies for the terminal 10 and the base station 20 to operate in a frequency band of 52.6 GHz to 71 GHz. In a case where an influence on a physical signal/channel specified in a study item (SI), a countermeasure is taken for the influence.

Features related to the timeline suitable for each new numerology. For example, preparing time and calculation time for each of bandwidth part (BWP) and beam switching time, hybrid automatic repeat request (HARQ) scheduling, user equipment (UE) processing, physical downlink shared channel (PDSCH), physical uplink shared channel (PUSCH)/sounding reference signal (SRS), and channel state information (CSI).

Up to 64 synchronization signal block (SSB) beams for an operation in a licensed frequency band and an operation in an unlicensed frequency band in a frequency band of 52.6 GHz to 71 GHz.

### (RAN1: Physical layer procedure)

A channel access mechanism that assumes a beam-based operation for conforming to regulations and requirements applied to the unlicensed frequency band between 52.6 GHz and 71 GHz.

### (RAN4: Core specifications for requirements of UE, gNB, and radio resource management (RRM))

Definition of RF core requirements of gNB and UE in a frequency band of 52.6 GHz to 71 GHz. A limited set of a combination of bands is included.

### (Channel raster and synchronization raster)

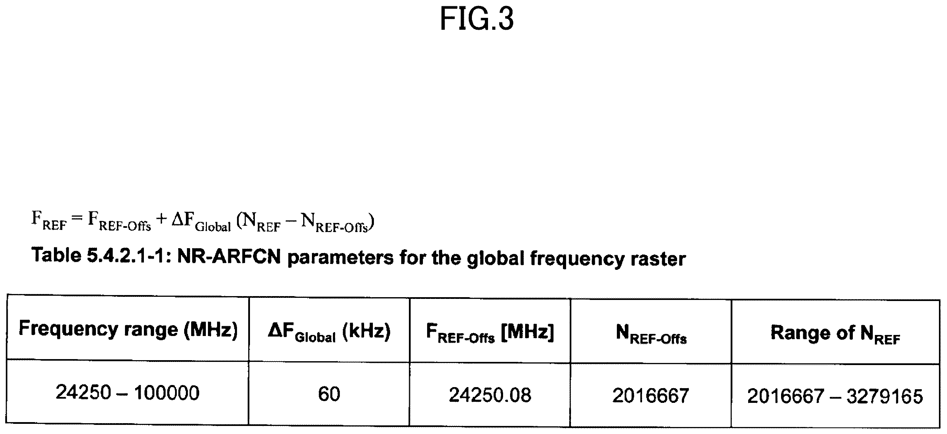

The channel raster is a candidate position where the center of an NR carrier can be disposed. In the current definition of the FR2, as illustrated in FIG. 3, the channel raster can be arranged per 60 kHz starting from 24250.08 MHz. In the following description, a channel raster disposed at 60 kHz is also referred to as "channel raster point".

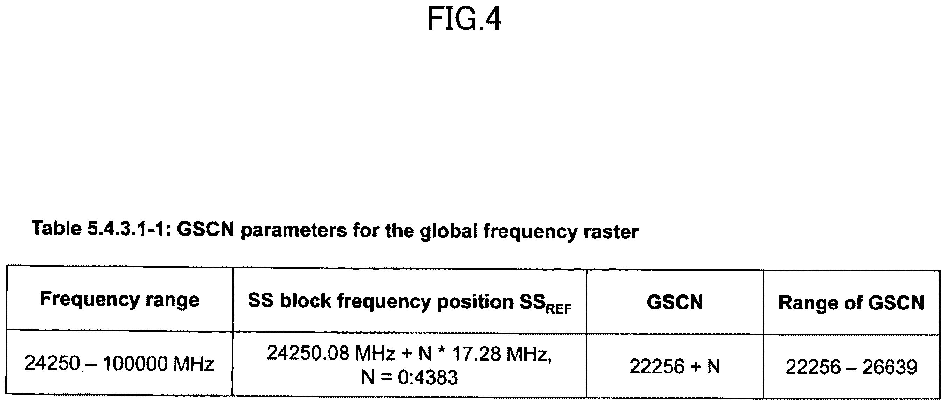

The synchronization raster is a candidate position of the center of a frequency at which the terminal 10 searches for a synchronization signal block (SSB) at the time of initial access at stand-alone. The synchronization raster may be referred to as a candidate position of the center of a frequency at which the SSB is transmitted in a cell that supports stand-alone for the initial access. In the current definition of the FR2, as illustrated in FIG. 4, the synchronization raster can be arranged per 17.28 kHz starting from 24250.08 MHz. In the following description, a synchronization raster disposed per 17.28 kHz is also referred to as "synchronization raster point."

As illustrated in FIG. 3 and FIG. 4, since the upper limit of the channel raster and the synchronization raster is 100 GHz, the channel raster and the synchronization raster are defined already with respect to a frequency band of 52.6 GHz to 71 GHz.

### (With Respect to channel raster and synchronization raster of New Radio Unlicensed (NR-U) of Release 16)

A channel raster of the FR1 (3 GHz or higher) of Release 15 is defined as starting from 3000 MHz and a raster exists per 15 kHz. However, in an NR-U band, it is assumed that a Wi-Fi (registered trademark) system and an NR system coexist. When a center frequency of an NR carrier is disposed at a frequency deviated from a center frequency used in the Wi-Fi system, for example, inefficiency such as occupancy of a frequency band corresponding to two Wi-Fi channels due to transmission of the NR carrier may occur. According to this, it is assumed that the channel raster of the NR-U of Release 16 is limited to a position near the center frequency of the Wi-Fi channel.

Under release 15, a synchronization raster of the FR1 (3GH or higher) is defined as starting from 3000 MHz and a raster exists per 1.44 MHZ. In a case where 20 MHz is assumed as a channel bandwidth unit in conformity to Wi-Fi, when the SSB is disposed to be close to the center frequency of a channel, there is a possibility that the physical downlink shared channel (PDSCH), which is transmitted simultaneously with the SSB, cannot be efficiently transmitted. Accordingly, it is assumed that the SSB is disposed at the end of the channel, and data is transmitted in a state of being frequency-multiplexed with the SSB. Accordingly, it is assumed that the synchronization rasters are limited to several synchronization rasters so that the SSB can be disposed at a channel edge. However, in a case where the frequency position of the SSB is too close to the channel edge, there is a possibility that a guard band between a frequency band of 20 MHz and a frequency band of 20 MHz adjacent to the frequency band, and a position of the SSB may overlap each other. Accordingly, it is assumed that the frequency position of the SSB is limited so as not to overlap the guard band.

### (NR-U of Release 15 and MIB of NR-U of Release 16)

For example, the Master Information Block (MIB) of the NR-U of release 15 and the master information block (MIB) of the NR-U of Release 16 include the following bits.

Six Most Significant Bits (MSB) of System Frame Number (SFN).

SubCarrierSpacingCommon (one bit). In the case of initial access of the NR-U, subcarrier spacing (SCS) of remaining minimum system information (RMSI) is always assumed to be the same as SCS of the SSB. Accordingly, one bit of SubCarrierSpacingCommon may be used for another purpose such as a part of the QCL parameter.

ssb-SubcarrierOffset (four bits). In the case of the NR-U, when the SSB is actually disposed in conformity with the definition of the assumed channel raster and synchronization raster, it is assumed that a candidate value of subcarrier offset between a resource block (RB) of the SSB and an RB of data becomes always even number, and, thus, the Least Significant Bit (or spare bit) of ssb-SubcarrierOffset may be used, for example, for another purpose such as a part of the QCL parameter.

### dmrs-TypeA-Position (one bit).

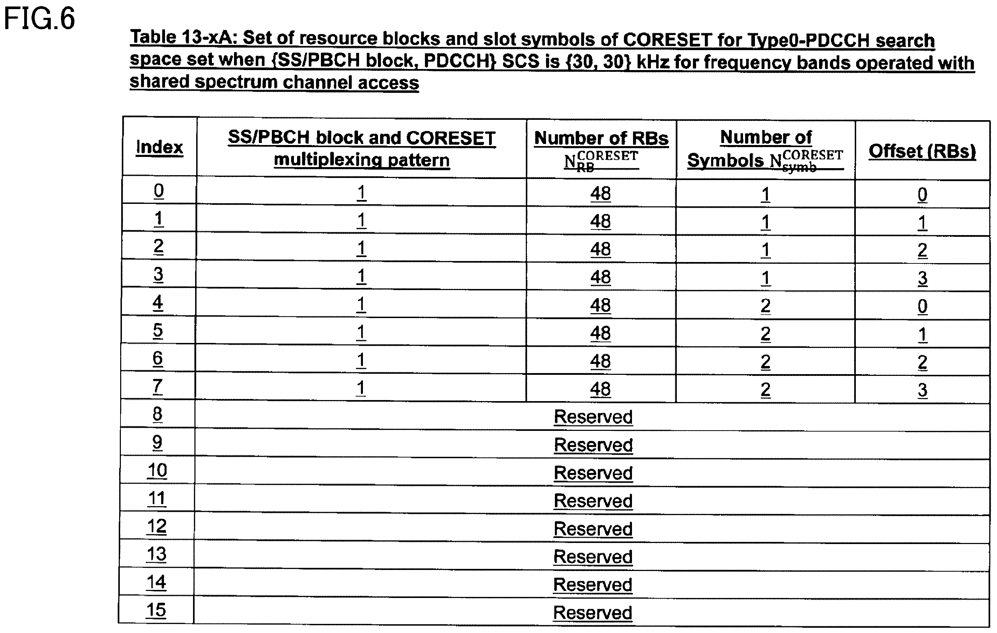

pdcch-ConfigSIB1 (eight bits). In the case of the NR-U, a CORESET#0 configuration table is newly added for a frequency band of the NR-U. Since a bandwidth (RB number) of CORESET#0 (control resource set #0), an offset from the RB of the SSB to a start position of the RB of CORESET#0, and the like are different from a licensed band, the new table is introduced. FIG. 5 and FIG. 6 are diagrams illustrating an example of the CORESET#0 configuration table that is newly added for the frequency band of the NR-U. In the case of the example in FIG. 5, the SCS is 15 kHz, and the number of RBs is 96. In the case of the example in FIG. 6, the SCS is 30 kHz, and the number of RBs is 48. In a case where the SCS is 15 kHz, and in a case where the SCS is 30 kHz, the number of RBs is different from the number of RBs in the case of a licensed band. In addition, in the tables illustrated in FIG. 5 and FIG. 6, a value of the offset (BRs) is different from a value in the case of the licensed band.
cellBarred (one bit).
intraFreqReselection (one bit).
spare (one bit).

### (Problem)

Since a frequency band of 52.6 GHz to 71 GHz includes an unlicensed band of 60 GHz, there is a possibility that the NR system may share the unlicensed band of 60 GHz with another system (for example, WiGig (IEEE802.11ad/ay)).

In this case, as in the case of the NR-U of Release 16, it is assumed that it is necessary to select an appropriate channel raster point and an appropriate synchronization raster point.

However, it is unclear how to select raster points in a frequency band of 60 GHz. The channel bandwidth of Wi-Fi can take a value of, for example, 20 MHz/40 MHz/80 MHz/160 MHz in units of 20 MHz. In addition, the bandwidth of the NR-U of Release 16 is in units of 20 MHz, and can take a value of, for example, 20 MHz/40 MHz/80 MHz/100 MHz.

In contrast, the bandwidth of WiGig is 2.16 GHz, and it is not assumed that the bandwidth of the NR FR2 is configured in a unit of 2.16 GHz (the maximum bandwidth of the FR2 is 400 MHz).

In addition, with regard to a part of the MIB bits, interpretation of the MIB bits is assumed to be changed from that of a normal FR2 as in the NR-U of Release 16. In particular, it is assumed that pdcch-ConfigSIB1, CORESET#0, and/or SearchSpace#0 configuration table are changed from the case of the FR2. However, specifically, it is unclear how to change interpretation of the MIB, the table, and the like.

### (Proposal 1)

In an NR unlicensed band of a frequency band higher than 52.6 GHz (for example, a band of 59 GHz to 64 GHz, a band of 57 GHz to 66 GHz, a band of 57 GHz to 64 GHz, a band of 57 GHz to 71 GHz, and the like), the base station 20 and/or the terminal 10 may select several channel raster points among a plurality of channel raster points that are currently defined in the NR unlicensed band of the frequency band higher than 52.6 GHz, for example, on the basis of at least one of Reference 1 and Reference 2 described below. For example, several channel raster points may be selectable among the plurality of channel raster points which are currently defined in the NR unlicensed band of the frequency band higher than 52.6 GHz only on the basis of Reference 1 or Reference 2. For example, several channel raster points may be selectable among the plurality of channel raster points which are currently defined in the NR unlicensed band of the frequency band higher than 52.6 GHz on the basis of Reference 1 and Reference 2.

### (Reference 1)

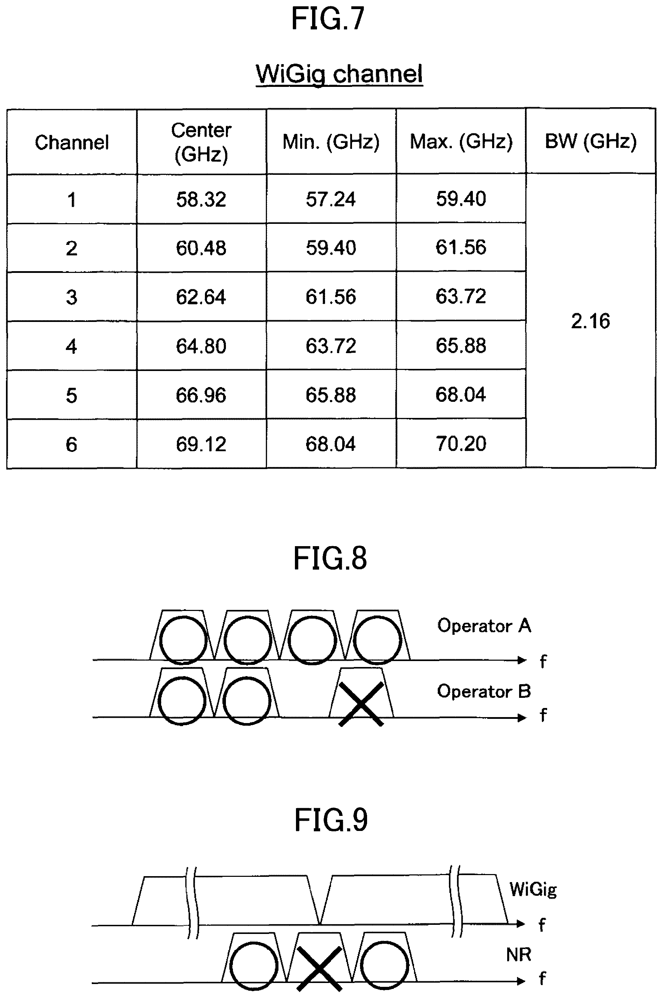

For example, an interval between two adjacent channel raster points selectable in the frequency band may be greater than or equal to a minimum channel bandwidth of the NR unlicensed band of the frequency band higher than 52.6 GHz, may be the same as the minimum channel bandwidth, or may be a value of an integral multiple of the minimum channel bandwidth. In this case, for example, as illustrated in FIG. 8, one or a plurality of channel frequency positions of Operator A and one or a plurality of channel frequency positions of Operator B can be aligned, and efficient coexistence is possible. Note that, for example, the minimum channel bandwidth of the NR unlicensed band of the frequency band higher than 52.6 GHz may be broader than the minimum channel bandwidth in the frequency band of the FR2. In addition, the channel raster point selectable in the frequency band may be defined per channel bandwidth that is used.

### (Reference 2)

For example, as illustrated in FIG. 9, the channel raster point may be selectable so that the channel of the NR does not overlap a channel edge of another communication system (for example, WiGig). Here, as illustrated in FIG. 7, for example, the WiGig channel edge may be 59.4 GHz, 61.56 GHz, 63.72 GHz, 65.88 GHz, or 68.04 GHz. Note that, the other communication system is not limited to WiGig. For example, the other communication system may be another NR system.

### (Operation Example)

For example, in the NR unlicensed band of the frequency band higher than 52.6 GHz, the base station 20 may select one or a plurality of channel raster points from selectable channel raster points defined so that an interval between two adjacent channel rasters is greater than or equal to the minimum channel bandwidth of the NR unlicensed band or an integral multiple of the minimum channel bandwidth, and may transmit channel configuration information based on the selected channel raster point to the terminal 10. The terminal 10 may receive the configuration information transmitted from the base station 20, and may specify a channel position of an uplink radio signal and a channel position of a downlink radio signal in the NR unlicensed band.

### (Proposal 2)

In the NR unlicensed band of the frequency band higher than 52.6 GHz (for example, a band of 59 GHz to 64 GHz, a band of 57 GHz to 66 GHz, a band of 57 GHz to 64 GHz, a band of 57 GHz to 71 GHz, and the like), the base station 20 and/or the terminal 10 may select several synchronization raster points among a plurality of synchronization raster points which are currently defined in the NR unlicensed band of the frequency band higher than 52.6 GHz, for example, on the basis of at least one of Reference 3 and Reference 4. For example, several synchronization raster points may be selectable among the plurality of synchronization raster points which are currently defined in the NR unlicensed band of the frequency band higher than 52.6 GHz only on the basis of Reference 3 or Reference 4. For example, several synchronization raster points may be selectable among the plurality of synchronization raster points which are currently defined in the NR unlicensed band of the frequency band higher than 52.6 GHz only on the basis of Reference 3 and Reference 4.

### (Reference 3)

For example, with regard to any combination among a plurality of combinations of the selectable channel raster and the channel bandwidth in the NR unlicensed band of the frequency band higher than 52.6 GHz, at least one synchronization raster point may be defined as being selectable so that a bandwidth of the SSB can be secured within the channel bandwidth.

### (Reference 4)

For example, the synchronization raster point may be defined as being selectable so that the band of the SSB is closer to a channel edge (may be an edge on a low frequency side or an edge on a high frequency side), and does not overlap a guard band between carriers.

The base station 20 may transmit, to the terminal 10, a notification of an offset value between a start position of CORESET#0 and a start position of the RB of the SSB within the CORESET#0 configuration. It is preferable that the number of the offset values between the start position of the CORESET#0 and the start position of the RB of the SSB is limited. For example, the number of the offset values between the start position of the CORESET#0 and the start position of the RB of the SSB may be up to one, two, or four.

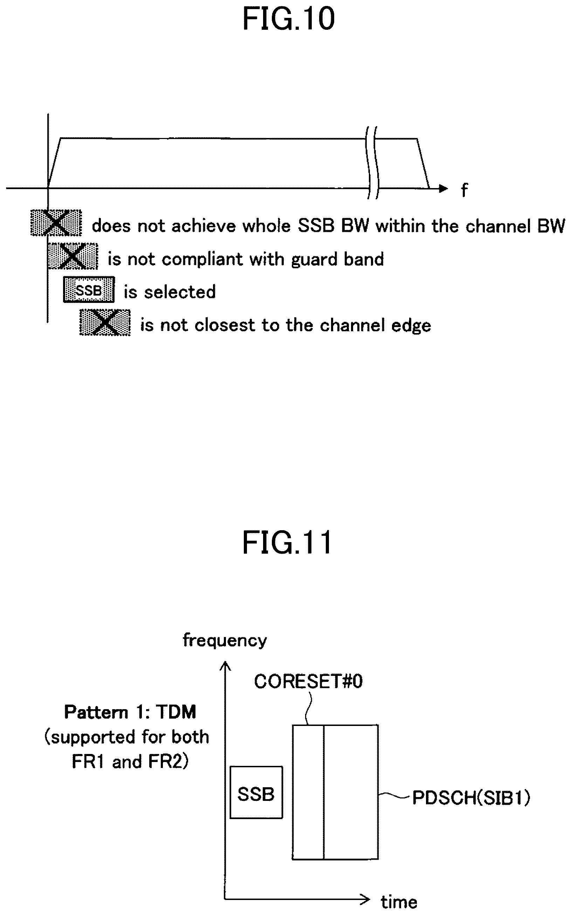

FIG. 10 is a diagram illustrating an example of limiting a selectable synchronization raster point on the basis of Reference 3 and Reference 4. As illustrated in FIG. 10, in the case of limiting the synchronization raster, a synchronization raster in which the band of the SSB is not within the channel bandwidth may be unselected. In addition, a synchronization raster in which the band of the SSB overlaps the guard band of the channel may be unselected. A synchronization raster in which the band of the SSB is close to the channel edge, and does not overlap the guard band of the carrier may be selected. In addition, a synchronization raster in which the band of the SSB is distant from the channel edge may be unselected.

### (Operation Example)

For example, in the NR unlicensed band of the frequency band higher than 52.6 GHz, the base station 20 selects a synchronization raster point for identifying a frequency position of the synchronization block (SSB) among candidates limited by a technical specification, and transmits the SSB to the terminal 10 on the selected synchronization raster point. For example, in initial access in the NR unlicensed band of the frequency band higher than 52.6 GHz, the terminal 10 performs a process of sequentially searching for the SSB on the synchronization raster point limited by the technical specification to identify the frequency position of the SSB.

### (Proposal 3)

In the NR unlicensed band of the frequency band higher than 52.6 GHz (for example, a band of 59 GHz to 64 GHz, a band of 57 GHz to 66 GHz, a band of 57 GHz to 64 GHz, a band of 57 GHz to 71 GHz, and the like), a new CORESET#0 configuration table different from the current CORESET#0 configuration table of the FR2 may be defined. The base station 20 and the terminal 10 may use the new CORESET#0 configuration table.

For example, in each table corresponding to a combination of the SCS of the SSB and the SCS of the RMSI PDCCH/PDSCH, as the number of resource blocks of the CORESET#0, only a single value may be defined. For example, the single value may be a value that is less than or equal to the minimum channel bandwidth of the NR unlicensed band of the frequency band higher than 52.6 GHz and is close to the minimum channel bandwidth, and may be a value that is an integral multiple of six resource blocks. Note that, the embodiments are not limited to the above-described example. For example, in each table corresponding to a combination of the SCS of the SSB and the SCS of the RMSI PDCCH/PDSCH, as the number of resource blocks of the CORESET#0, multiple values may be defined. For example, in a case where the multiple values are defined, any value among the plurality of values may be selected for use based on a value included in the DCI.

FIG. 11, FIG. 12, and FIG. 13 are diagrams illustrating an example of a multiplexing pattern of the SSB and the CORESET#0.

FIG. 11 illustrates an example of Pattern 1 in which the SSB and the CORESET#0 are time division multiplexed (TDM: Time Division Multiplexing). Pattern 1 is supported for the FR1 and the FR2.

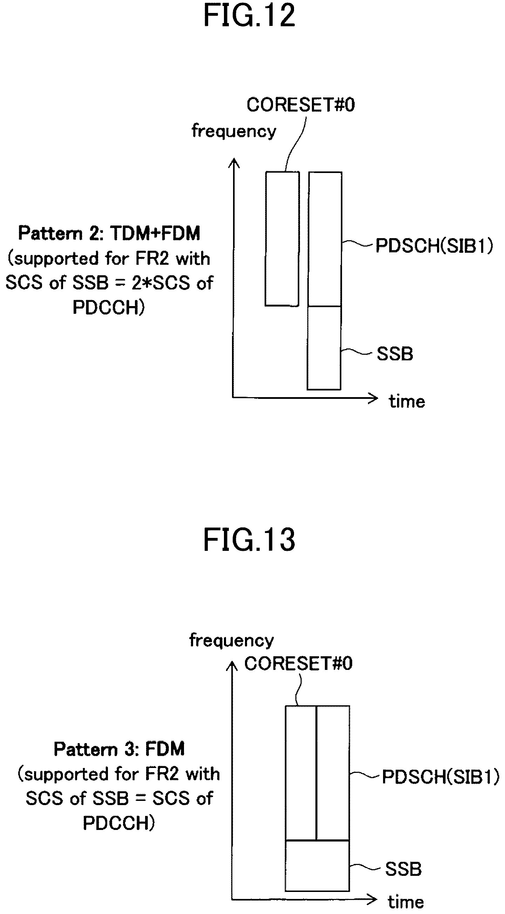

FIG. 12 illustrates an example of Pattern 2 in which the SSB and the CORESET#0 are time and frequency division multiplexed (TDM+frequency division multiplexing (FDM)). As illustrated in FIG. 12, in Pattern 2, data (PDSCH (SIB1)) of the SIB1 and the SSB are frequency division multiplexed. Pattern 2 is supported in the FR2, and is applied to a case where the SCS of the SSB is two times the SCS of the RMSI (PDCCH/PDSCH).

FIG. 13 illustrates an example of Pattern 3 in which the CORESET#0 and the PDSCH (SIB1) are frequency division multiplexed (FDM) with the SSB. Pattern 3 is supported in the FR2 and is applied to a case where the SCS of the SSB is the same as the SCS of the RMSI (PDCCH/PDSCH).

### (Alt. 1)

As the multiplexing pattern of the SSB and the CORESET#0 in the case of the NR unlicensed band of the frequency band higher than 52.6 GHz, for example, Pattern 1, Pattern 2, and Pattern 3 may be supported.

### (Alt. 2)

As the multiplexing pattern of the SSB and the CORESET#0 in the case of the NR unlicensed band of the frequency band higher than 52.6 GHz, for example, any one of Pattern 2 and Pattern 3 may be supported. Since the SSB and the SIB1 are basically transmitted with the same beam, Pattern 2 and Pattern 3 are preferable in the FR2 in order to reduce overhead of beam sweeping.

In the case of Pattern 2, the CORESET#0 and the SSB are time division multiplexed. However, in the case of Pattern 2, it is possible to secure a large number of symbols for transmitting the SIB1 in comparison to Pattern 3. Accordingly, even if the SCS of the SSB and the SCS of the RMSI (PDCCH/PDSCH) are the same, Pattern 2 may be selected.

In addition, for a different combination of the SCS of the SSB and the SCS of the RMSI (PDCCH/PDSCH), a combination of a different multiplexing pattern between the SSB and the CORESET#0 may be selected.

In addition, several entries of the new CORESET#0 configuration table (for example, the number of RBs) may be reserved. Alternatively, newly defined information (for example, a QCL parameter) may be transmitted by an entry in the new CORESET#0 configuration table (for example, newly defined information such as the QCL parameter may be transmitted by using association between the index and the parameter in the new CORESET#0 configuration table).

In addition, for example, the number of candidate values of offset (RBs) of the new CORESET#0 configuration table may be limited to one, two, or four.

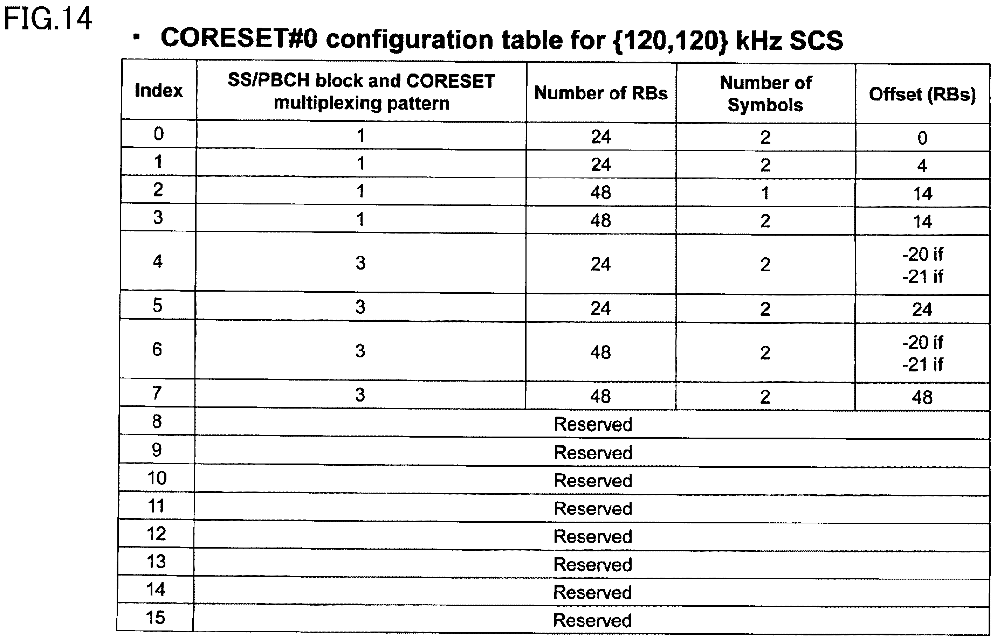

FIG. 14 is a diagram illustrating an example of the CORESET#0 configuration table. For example, a value of "SS/PBCH block and CORESET multiplexing pattern" is one or three in the example in FIG. 14, but the embodiments are not limited to this example. For example, the value of the "SS/PBCH block and CORESET multiplexing pattern" may be 1 or 2, only 2, or only 3. In addition, a value of "Number of RBs" is 24 or 48 in the example in FIG. 14, but the embodiments are not limited to these examples. For example, the value of "Number of RBs" may be limited to only one value such as only 24 or only 48. In addition, "Offset (RBs)" is 0, 4, 14, -20, or -21 in the example in FIG. 14, but the embodiments are not limited to these examples. For example, in a case where the "SS/PBCH block and CORESET multiplexing pattern" is limited to 2 or 3, "Offset (RBs)" may be limited to -20 or -21.

### (Operation Example)

For example, the base station 20 configures four MSBs of the PDCCH-ConfigSIB1 included in the MIB on the basis of a corresponding relationship between configuration of the CORESET#0 defined in the CORESET#0 configuration table defined with respect to the NR unlicensed band of the frequency band higher than 52.6 GHz, and the index, and transmits the configured MIB to the terminal 10. For example, in the NR unlicensed band of the frequency band higher than 52.6 GHz, the terminal 10 receives the MIB transmitted from the base station20, and interprets the four MSBs of the PDCCH-ConfigSIB1 included in the MIB on the basis of the corresponding relationship between the configuration of the CORESET#0 defined in the CORESET#0 configuration table defined in the NR unlicensed band and the index, and performs configuration of the CORESET#0.

### (Device Configuration)

Next, a functional configuration example of the terminal 10 and the base station 20 which execute the above-described processing operations is described. The terminal 10 and the base station 20 are provided with all functions described in the embodiments. However, the terminal 10 and the base station 20 may be provided with partial functions among the all functions described in the embodiments. Note that, the terminal 10 and the base station 20 may be collectively referred to as a communication device.

### <Terminal>

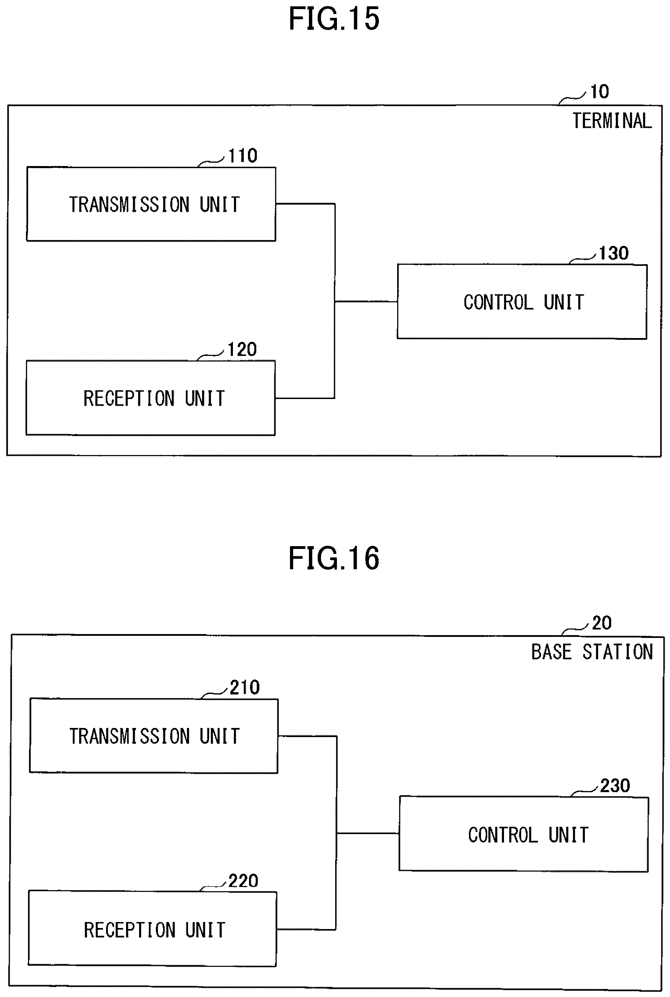

FIG. 15 is a diagram illustrating an example of a functional configuration of the terminal 10. As illustrated in FIG. 15, the terminal 10 includes a transmission unit 110, a reception unit 120, and a control unit 130. The functional configuration illustrated in FIG. 15 is illustrative only. A functional division and the names of the functional units may be any division and name as long as the operation according to the embodiments can be executed. Note that, the transmission unit 110 may be referred to as a transmitter, and the reception unit 120 may be referred to as a receiver.

The transmission unit 110 creates transmission from transmission data, and wirelessly transmits the transmission signal. The transmission unit 110 may form one or a plurality of beams. The reception unit 120 wirelessly receives various signals, and acquires a signal of a higher layer from a received physical layer signal. In addition, the reception unit 120 includes a measurement unit that performs measurement of a signal that is received to obtain received power or the like.

The control unit 130 performs control of the terminal 10. Note that, a function of the control unit 130 which relates to transmission may be included in the transmission unit 110, and a function of the control unit 130 which relates to reception may be included in the reception unit 120.

For example, in the NR unlicensed band of the frequency band higher than 52.6 GHz, the reception unit 120 may receive, from the base station 20, channel configuration information based on a channel raster pattern selected, and the control unit 130 may identify a channel position of an uplink radio signal and a channel position of a downlink radio signal in the NR unlicensed band on the basis of the configuration information received by the reception unit 120. In addition, for example, in the NR unlicensed band of the frequency band higher than 52.6 GHz, at the time of initial access, the control unit 130 of the terminal 10 may perform a process of sequentially searching for the synchronization block on the synchronization raster to identify a frequency position of the synchronization block in the NR unlicensed band.

For example, in the NR unlicensed band of the frequency band higher than 52.6 GHz, the reception unit 120 may receive the MIB transmitted from the base station 20, and the control unit 130 may interpret four MSBs of the PDCCH-ConfigSIB1 included in the MIB on the basis of a corresponding relationship between the configuration of the CORESET#0 defined in the CORESET#0 configuration table defined in the NR unlicensed band and the index.

### <Base Station 20>

FIG. 16 is a diagram illustrating an example of a functional configuration of the base station 20. As illustrated in FIG. 16, the base station 20 includes a transmission unit 210, a reception unit 220, and a control unit 230. A functional configuration illustrated in FIG. 16 is illustrative only. A functional division and the names of the functional units may be any division and name as long as the operation according to the embodiments can be executed. Note that, the transmission unit 210 may be referred to as a transmitter, and the reception unit 220 may be referred to as a receiver.

The transmission unit 210 includes a function of generating a signal to be transmitted to the terminal 10 side, and wirelessly transmitting the signal. The reception unit 220 includes a function of receiving various signals transmitted from the terminal 10, and acquiring, for example, information of a higher layer from the received signals. In addition, the reception unit 220 includes a measurement unit that performs measurement of a signal that is received to obtain received power or the like.

The control unit 230 performs control of the base station 20. Note that, a function of the control unit 230 which relates to transmission may be included in the transmission unit 210, and a function of the control unit 230 which relates to reception may be included in the reception unit 220.

For example, in the NR unlicensed band of the frequency band higher than 52.6 GHz, the control unit 230 may select the channel raster point for identifying a channel position of an uplink radio signal and a channel position of a downlink radio signal among candidates limited by a technical specification, and the transmission unit 210 may transmit channel configuration information based on the channel raster point selected by the control unit 230 to the terminal 10. In addition, for example, in the NR unlicensed band of the frequency band higher than 52.6 GHz, the control unit 230 may select the synchronization raster point for identifying a frequency position of the synchronization block among candidates limited by a technical specification, and the transmission unit 210 may transmit the SS block to the terminal 10 on the synchronization raster point generated by the control unit 230.

For example, the control unit 230 may configure four MSBs of the PDCCH-ConfigSIB1 included in the MIB on the basis of a corresponding relationship between configuration of the CORESET#0 defined in the CORESET#0 configuration table defined in the NR unlicensed band of the frequency band higher than 52.6 GHz and the index, and the transmission unit 210 may transmit the MIB configured by the control unit 230 to the terminal 10.

### <Hardware Configuration>

The block diagrams (Fig. 15 and Fig. 16) which are used in description of the embodiments illustrate blocks in a functional unit. The functional blocks (components) are implemented by a combination of hardware and/or software. In addition, means for implementing respective functional blocks is not particularly limited. That is, the respective functional blocks may be implemented by one device in which a plurality of elements are physically and/or logically combined. In addition, two or more devices, which are physically and/or logically separated from each other, may be directly and/or indirectly connected (for example, in a wired manner and/or a wireless manner), and the respective functional blocks may be implemented by a plurality of the devices.

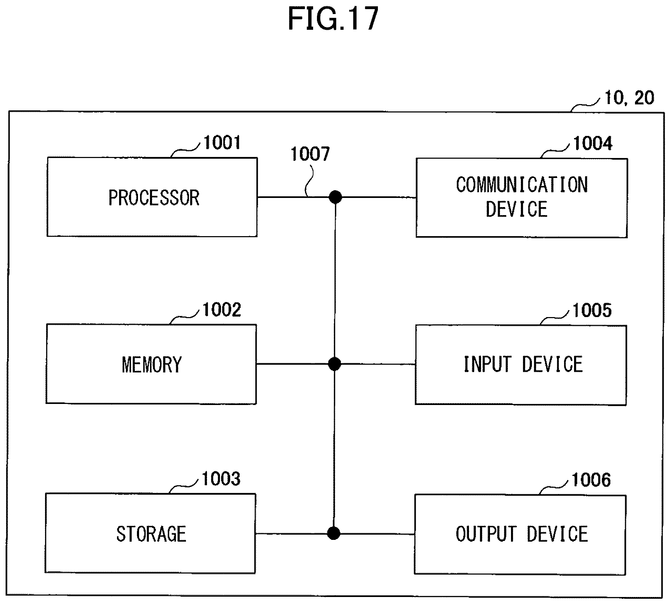

For example, each of the terminal 10 and the base station 20 according to an embodiment of the present invention may function as a computer performing the process according to the embodiments. FIG. 17 is a diagram illustrating an example of a hardware configuration of the terminal 10 and the base station 20 according to the embodiments. Each of the above-described terminal 10 and base station 20 may be physically configured as a computer device including a processor 1001, a memory 1002, an storage 1003, a communication device 1004, an input device 1005, an output device 1006, a bus 1007, and the like.

In the following description, the term "device" can be replaced with a circuit, a device, a unit, or the like. The hardware configuration of the terminal 10 and the base station 20 may include one or more of the devices denoted by 1001-1006 in the figure, or may be configured without some devices.

Each function of the terminal 10 and the base station 20 is implemented by loading predetermined software (program) on hardware, such as the processor 1001 and the memory 1002, so that the processor 1001 performs computation and controls communication by the communication device 1004, and reading and writing of data in the memory 1002 and the storage 1003.

The processor 1001, for example, operates an operating system to control the entire computer. The processor 1001 may be configured with a central processing unit (CPU: Central Processing Unit) including an interface with a peripheral device, a control device, a processing device, a register, and the like.

Additionally, the processor 1001 reads a program (program code), a software module, or data from the storage 1003 and/or the communication device 1004 to the memory 1002, and executes various processes according to these. As the program, a program is used that causes a computer to execute at least a part of the operations described in the above-described embodiments. For example, the transmission unit 110, the reception unit 120, and the control unit 130 of the terminal 10 illustrated in FIG. 15 may be implemented by a control program that is stored in the memory 1002 and that is operated by the processor 1001. Furthermore, for example, the transmission unit 210, the reception unit 220, and the control unit 230 of the base station 20 illustrated in FIG. 16 may be implemented by a control program that is stored in the memory 1002 and that is operated by the processor 1001. While the various processes described above are described as being executed in one processor 1001, they may be executed simultaneously or sequentially by two or more processors 1001. The processor 1001 may be implemented by one or more chips. The program may be transmitted from a network via a telecommunications line.

The memory 1002 is a computer readable storage medium, and, for example, the memory 1002 may be formed of at least one of a Read Only Memory (ROM), an Erasable Programmable ROM (EPROM), an Electrically Erasable Programmable ROM (EEPROM), a Random Access Memory (RAM), and the like. The memory 1002 may be referred to as a register, a cache, a main memory (main storage device), or the like. The memory 1002 may store a program (program code), a software module, or the like, which can be executed for implementing the process according to one embodiment of the present invention.

The storage 1003 is a computer readable storage medium and may be formed of, for example, at least one of an optical disk, such as a Compact Disc ROM (CD-ROM), a hard disk drive, a flexible disk, an optical magnetic disk (e.g., a compact disk, a digital versatile disk, a Blu-ray (registered trademark) disk, a smart card, a flash memory (e.g., a card, a stick, a key drive), a floppy (registered trademark) disk, a magnetic strip, and the like. The storage 1003 may be referred to as an auxiliary storage device. The above-described storage medium may be, for example, a database including the memory 1002 and/or the storage 1003, a server, or any other suitable medium.

The communication device 1004 is hardware (transmitting and receiving device) for performing communication between computers through a wired network and/or a wireless network, and is also referred to, for example, as a network device, a network controller, a network card, a communication module, or the like. For example, the transmission unit 110 and the reception unit 120 of the terminal 10 may be implemented by the communication device 1004. Furthermore, the transmission unit 210 and the reception unit 220 of the base station 20 may be implemented by the communication device 1004.

The input device 1005 is an input device (e.g., a keyboard, a mouse, a microphone, a switch, a button, and/or a sensor) that receives an external input. The output device 1006 is an output device (e.g., a display, a speaker, and/or an LED lamp) that performs output toward outside. The input device 1005 and the output device 1006 may be configured to be integrated (e.g., a touch panel).

Each device, such as the processor 1001 and the memory 1002, is also connected by the bus 1007 for communicating information. The bus 1007 may be formed of a single bus or may be formed of different buses between devices.

The terminal 10 and the base station 20 may each include hardware, such as a microprocessor, a digital signal processor (DSP: Digital Signal Processor), an Application Specific Integrated Circuit (ASIC), a Programmable Logic Device (PLD), and a Field Programmable Gate Array (FPGA), which may implement some or all of each functional block. For example, processor 1001 may be implemented by at least one of these hardware components.

### (Conclusion of the embodiments)

In the specification, at least the terminal and the base station described below are disclosed.

A terminal including a reception unit that receives configuration information in an unlicensed band of a high frequency band higher than or equal to a frequency band of a frequency range 2 (FR2) between a frequency range 1 (FR1) that is a low frequency band and the FR2 that is a high frequency band in a new radio (NR) system; and a control unit that configures at least one of channel configuration based on a channel raster point selected by a base station, or control resource set configuration in the unlicensed band on the basis of the configuration information.

According to the configuration, in the unlicensed band of the high frequency band in the NR system, the terminal can identify at least one of the channel raster point configuration or the control resource set configuration.

The configuration information may include information on the channel configuration, and in the information on the channel configuration, a frequency interval between two adjacent channel raster points is greater than or equal to a minimum channel bandwidth of the unlicensed band, or an integral multiple of the minimum channel bandwidth.

According to the configuration, the terminal can configure channel configuration that does not include channel configuration in which one channel used by the terminal provides interference on two adjacent channels used by another operator.

The control unit may perform a process of searching for a synchronization signal block on a synchronization raster point, the synchronization raster point being limited by a technical specification, during initial access in the unlicensed band.

According to the configuration, an operation be performed in which the synchronization signal block is mapped to an edge portion of a channel bandwidth which is used in the unlicensed band and which is disposed at a position that does not overlap a guard band of the channel bandwidth.

The configuration information may include information on the control resource set configuration, and the information on the control resource set configuration may include information that specifies a multiplexing pattern of a synchronization signal block and the control resource set used in the unlicensed band, the number of resource blocks, an offset value between a frequency position of the synchronization signal block and a frequency position of the control resource set, and a quasi co-location parameter.

According to the configuration, the QCL parameter can be transmitted to the terminal by using a bit that is not related to the control resource set configuration.

A base station including a control unit that selects a channel raster point among candidates limited by a technical specification in an unlicensed band of a high frequency band higher than or equal to a frequency band of a frequency range 2 (FR2) between a frequency range 1 (FR1) that is a low frequency band and the FR2 that is a high frequency band in a new radio (NR) system, generates channel configuration information based on the selected channel raster point, selects a synchronization raster point among candidates limited by the technical specification, and generates control resource set configuration information; and a transmission unit that transmits the channel configuration information and the control resource set configuration information, and transmits a synchronization signal block on the selected synchronization raster point.

According to the configuration, the base station can transmit, to the terminal, a notification of at least one of the cannel configuration or the control resource set configuration in the unlicensed band of the high frequency band in the NR system. In addition, an operation can be performed in which the synchronization signal block is mapped to an edge portion of a channel bandwidth which is used in the unlicensed band and which is disposed at a position that does not overlap a guard band of the channel bandwidth.

### (Supplemental embodiment)

The embodiments of the present invention are described above, but the disclosed invention is not limited to the above-described embodiments, and those skilled in the art would understand various modified examples, revised examples, alternative examples, substitution examples, and the like. In order to facilitate understanding of the present invention, specific numerical value examples are used for description, but the numerical values are merely examples, and certain suitable values may be used unless otherwise stated. The classification of items in the above description is not essential to the present invention. Matters described in two or more items may be combined and used if necessary, and a matter described in one item may be applied to a matter described in another item (unless inconsistent). The boundary between functional units or processing units in a functional block diagram does not necessarily correspond to the boundary between physical parts. Operations of a plurality of functional units may be performed physically by one component, or an operation of one functional unit may be physically performed by a plurality of parts. In the processing procedure described in the embodiments, the order of the processes may be changed as long as there is no contradiction. For the sake of convenience of processing description, the terminal 10 and the base station 20 are described using the functional block diagrams, but such devices may be implemented by hardware, software, or a combination thereof. Software executed by the processor included in the terminal 10 according to the embodiments of the present invention and software executed by the processor included in the base station 20 according to the embodiments of the present invention may be stored in a random access memory (RAM), a flash memory, a read only memory (ROM), an EPROM, an EEPROM, a register, a hard disk (HDD), a removable disk, a CD-ROM, a database, a server, or any other appropriate storage medium.

Furthermore, a notification of information is not limited to the aspects or embodiments described in the present specification and may be provided by any other method. For example, the notification of information may be provided by physical layer signaling (for example, downlink control information (DCI) or uplink control information (UCI)), higher layer signaling (for example, radio resource control (RRC) signaling, medium access control (MAC) signaling, broadcast information (master information block (MIB), system information block (SIB)), other signals, or a combination thereof. Furthermore, the RRC signaling may be referred to as an RRC message and may be, for example, an RRC connection setup message, an RRC connection reconfiguration message, or the like.

Each aspect and embodiment described in the present specification may be applied to Long Term Evolution (LTE), LTE-advanced (LTE-A), SUPER 3G, IMT-advanced, 4G, 5G, Future Radio Access (FRA), W-CDMA (registered trademark), GSM (registered trademark), CDMA 2000, Ultra Mobile Broadband (UMB), IEEE 802.11 (Wi-Fi), IEEE 802.16 (WiMAX), IEEE 802.20, Ultra-WideBand (UWB), Bluetooth (registered trademark), a system using any other appropriate system, and/or next generation systems extended based on these standards.

The processing procedures, the sequences, the flowcharts, and the like of the respective aspects/embodiments described in the present specification may be reversed in order provided that there is no contradiction. For example, the method described in the present specification presents elements of various steps with an exemplary order and is not limited to a presented specific order.

In the present specification, a specific operation to be performed by the base station 20 may be performed by an upper node in some cases. In the network including one or more network nodes including the base station 20, various operations performed for communication with the terminal 10 can be obviously performed by the base station 20 and/or any network node (for example, an MME, an S-GW, or the like is considered, but it is not limited thereto) other than the base station 20. A case is exemplified above in which there is one network node other than the base station 20. The one network node may be a combination of a plurality of other network nodes (e.g., MME and S-GW).

The aspects/embodiments described in this specification may be used alone, in combination, or switched with implementation.

The terminal 10 may be referred to, by a person ordinarily skilled in the art, as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or some other suitable terms.

The base station 20 may be defined by those skilled in the art as a NodeB (NB), enhanced node B (eNB), base station, gNB, or several appropriate terminologies.

A bandwidth part (BWP: Bandwidth Part) (which may be referred to as a partial bandwidth) may indicate a subset of consecutive common resource blocks (RBs) for a certain numerology in a certain carrier. Here, a common RB may be specified by an index of an RB based on a common reference point of a carrier. A PRB may be defined in a BWP and numbered in a BWP.

The BWP may include a BWP for UL (UL BWP) and a BWP for DL (DL BWP). In a UE, one or more BWPs may be configured within one carrier.

At least one of configured BWPs may be active, and it is not be assumed that the UE transmits and receives a predetermined signal/channel outside an active BWP. Further, a "cell," a "carrier," or the like in the present disclosure may be replaced with a "BWP."

The terms "determine (determining)" and "decide (determining)" used in this specification may include various types of operations. For example, "determining" and "deciding" may include deeming that a result of judging, calculating, computing, processing, deriving, investigating, looking up (e.g., search in a table, a database, or another data structure), or ascertaining is determined or decided. Furthermore, "determining" and "deciding" may include, for example, deeming that a result of receiving (e.g., reception of information), transmitting (e.g., transmission of information), input, output, or accessing (e.g., accessing data in memory) is determined or decided. Furthermore, "determining" and "deciding" may include deeming that a result of resolving, selecting, choosing, establishing, or comparing is determined or decided. Namely, "determining" and "deciding" may include deeming that some operation is determined or decided.

The description "based on" in this specification does not represent "only based on" unless otherwise stated. In other words, description of "based on" represents both "only based on" and "at least based on."

In this specification or the appended claims, in a case where "include," "including," and a modification thereof are used, these terms are intended as comprehensive terms similar to "comprising." In addition, a term "or" that is used in this specification and the appended claims is not intended as an exclusive OR.

In the entire present disclosure, for example, when an article such as "a," "an," and "the" in English is added by a translation, the article may include multiple things, unless the context explicitly indicates that the article does not include the multiple things.

Although the present invention is described above in detail, it is obvious to those skilled in the art that the present invention is not limited to the embodiments described in the specification. The present invention may be implemented as revised and modified embodiments without departing from the scope of the present invention as set forth in claims. Accordingly, the description of the specification is for the purpose of illustration and does not have any restrictive meaning to the present invention.

### LIST OF REFERENCE SYMBOLS

10 terminal
110 transmission unit
120 reception unit
130 control unit
20 base station
210 transmission unit
220 reception unit
230 control unit
1001 processor
1002 memory
1003 storage
1004 communication device
1005 input device
1006 output device

## Claims

1. A terminal (10) comprising:
a reception unit (120) configured to receive broadcast information including a configured value of a control resource set; and
a control unit (130) configured to determine a number of resource blocks and a number of symbols of a control resource set for a cell search based on a first information,
wherein the first information is specified for a first frequency range, and the first information associates the configured value of the control resource set with the number of resource blocks and the number of symbols of the control resource set,
wherein the first frequency range is 52.6 GHz to 71 GHz, the first information differs from a second information, and
the second information is specified for a second frequency range that is 24.25 GHz to 52.6 GHz, and the second information associates the configured value of the control resource set with the number of resource blocks and the number of symbols of the control resource set.

2. The terminal (10) according to claim 1,
wherein the control unit (130) selects, for an unlicensed band in the first frequency range, a synchronization raster from a subset of a synchronization raster specified for the second frequency range.

3. A base station (20) comprising:
a transmission unit (210) configured to transmit, to a terminal, broadcast information including a configured value of a control resource set; and
a control unit (230) configured to assume that a number of resource blocks and a number of symbols of a control resource set for a cell search are determined based on a first information, wherein the first information is specified for a first frequency range, the first information associates the configured value of the control resource set with the number of resource blocks and the number of symbols of the control resource set, and the first frequency range is 52.6 GHz to 71 GHz,
wherein the first information differs from a second information,
the second information is specified for a second frequency range that is 24.25 GHz to 52.6 GHz, and the second information associates the configured value of the control resource set with the number of resource blocks and the number of symbols of the control resource set.

4. A communication method executed by a terminal (10), the method comprising:
receiving broadcast information including a configured value of a control resource set; and
determining a number of resource blocks and a number of symbols of a control resource set for a cell search based on first information, wherein the first information is specified for a first frequency range, the first information associates the configured value of the control resource set with the number of resource blocks and the number of symbols of the control resource set, and the first frequency range is 52.6 GHz to 71 GHz,
wherein the first information differs from a second information, the second information is specified for a second frequency range that is 24.25 GHz to 52.6 GHz, and the second information associates the configured value of the control resource set with the number of resource blocks and the number of symbols of the control resource set.

5. A communication system comprising:
a base station (20) according to claim 3, and
a terminal (10) according to one of claims 1 to 2.

## Patentansprüche

1. Endgerät (10), umfassend:
eine Empfangseinheit (120), die ausgebildet ist, um Funkinformationen einschließlich eines konfigurierten Werts eines Steuerressourcensatzes zu empfangen; und
eine Steuereinheit (130), die ausgebildet ist, um eine Anzahl von Ressourcenblöcken und eine Anzahl von Symbolen eines Steuerressourcensatzes für eine Zellensuche auf der Grundlage einer ersten Information zu bestimmen,
wobei die erste Information für einen ersten Frequenzbereich spezifiziert ist und die erste Information den konfigurierten Wert des Steuerressourcensatzes mit der Anzahl von Ressourcenblöcken und der Anzahl von Symbolen des Steuerressourcensatzes verknüpft,
wobei der erste Frequenzbereich 52,6 GHz bis 71 GH beträgt, die erste Information sich von der zweiten Information unterscheidet und
die zweite Information für einen zweiten Frequenzbereich spezifiziert ist, der 24,25 GHz bis 52,6 GHz beträgt, und die zweite Information den konfigurierten Wert des Steuerressourcensatzes mit der Anzahl von Ressourcenblöcken und der Anzahl von Symbolen des Steuerressourcensatzes verknüpft.

2. Endgerät (10) nach Anspruch 1,
wobei die Steuereinheit (130) für ein unlizenziertes Band im ersten Frequenzbereich ein Synchronisationsraster aus einer Teilmenge eines für den zweiten Frequenzbereich spezifizierten Synchronisationsrasters auswählt.

3. Basisstation (20), umfassend:
eine Übertragungseinheit (210), die ausgebildet ist, um Funkinformationen einschließlich eines konfigurierten Werts eines Steuerressourcensatzes an ein Endgerät zu übertragen; und
eine Steuereinheit (230), die ausgebildet ist, um anzunehmen, dass eine Anzahl von Ressourcenblöcken und eine Anzahl von Symbolen eines Steuerressourcensatzes für eine Zellensuche auf der Grundlage einer ersten Information bestimmt werden, wobei die erste Information für einen ersten Frequenzbereich spezifiziert ist, die erste Information den konfigurierten Wert des Steuerressourcensatzes mit der Anzahl von Ressourcenblöcken und der Anzahl von Symbolen des Steuerressourcensatzes verknüpft und der erste Frequenzbereich 52,6 GHz bis 71 GH beträgt,
wobei sich die erste Information sich von der zweiten Information unterscheidet,
die zweite Information für einen zweiten Frequenzbereich spezifiziert ist, der 24,25 GHz bis 52,6 GHz beträgt, und die zweite Information den konfigurierten Wert des Steuerressourcensatzes mit der Anzahl von Ressourcenblöcken und der Anzahl von Symbolen des Steuerressourcensatzes verknüpft.

4. Kommunikationsverfahren, das von einem Endgerät (10) ausgeführt wird, wobei das Verfahren Folgendes umfasst:
Empfangen von Funkinformationen einschließlich eines konfigurierten Werts eines Steuerressourcensatzes; und
Bestimmen einer Anzahl von Ressourcenblöcken und einer Anzahl von Symbolen eines Steuerressourcensatzes für eine Zellensuche auf der Grundlage einer ersten Information, wobei die erste Information für einen ersten Frequenzbereich spezifiziert ist, die erste Information den konfigurierten Wert des Steuerressourcensatzes mit der Anzahl von Ressourcenblöcken und der Anzahl von Symbolen des Steuerressourcensatzes verknüpft und der erste Frequenzbereich 52,6 GHz bis 71 GH beträgt,
wobei sich die erste Information von der zweiten Information unterscheidet, die zweite Information für einen zweiten Frequenzbereich spezifiziert ist, der 24,25 GHz bis 52,6 GHz beträgt, und die zweite Information den konfigurierten Wert des Steuerressourcensatzes mit der Anzahl von Ressourcenblöcken und der Anzahl von Symbolen des Steuerressourcensatzes verknüpft.

5. Kommunikationssystem, umfassend:
eine Basisstation (20) nach Anspruch 3, und
ein Endgerät (10) nach einem der Ansprüche 1 bis 2.

## Revendications

1. Terminal (10) comprenant :
une unité (120) de réception configurée pour recevoir des informations de diffusion incluant une valeur configurée d'un ensemble de ressources de commande ; et
une unité de commande (130) configurée pour déterminer un nombre de blocs de ressources et un nombre de symboles d'un ensemble de ressources de commande pour une recherche de cellule sur la base d'une première information,
dans lequel la première information est spécifiée pour une première plage de fréquences, et la première information associe la valeur configurée de l'ensemble de ressources de commande au nombre de blocs de ressources et au nombre de symboles de l'ensemble de ressources de commande,
dans lequel la première plage de fréquences est 52,6 GHz à 71 GHz, la première information diffère d'une deuxième information, et
la deuxième information est spécifiée pour une deuxième plage de fréquences qui est 24,25 GHz à 52,6 GHz, et la deuxième information associe la valeur configurée de l'ensemble de ressources de commande au nombre de blocs de ressources et au nombre de symboles de l'ensemble de ressources de commande.

2. Terminal (10) selon la revendication 1,
dans lequel l'unité de commande (130) sélectionne, pour une bande sans licence dans la première plage de fréquences, une trame de synchronisation à partir d'un sous-ensemble d'une trame de synchronisation spécifiée pour la deuxième plage de fréquences.

3. Station (20) de base comprenant :
une unité de transmission (210) configurée pour transmettre, à un terminal, des informations de diffusion incluant une valeur configurée d'un ensemble de ressources de commande ; et
une unité de commande (230) configurée pour supposer qu'un nombre de blocs de ressources et un nombre de symboles d'un ensemble de ressources de commande pour une recherche de cellule sont déterminés sur la base d'une première information, dans laquelle la première information est spécifiée pour une première plage de fréquences, la première information associe la valeur configurée de l'ensemble de ressources de commande au nombre de blocs de ressources et au nombre de symboles de l'ensemble de ressources de commande, et la première plage de fréquences est 52,6 GHz à 71 GHz,
dans laquelle la première information diffère d'une deuxième information,
la deuxième information est spécifiée pour une deuxième plage de fréquences qui est 24,25 GHz à 52,6 GHz, et la deuxième information associe la valeur configurée de l'ensemble de ressources de commande au nombre de blocs de ressources et au nombre de symboles de l'ensemble de ressources de commande.

4. Procédé de communication mis en œuvre par un terminal (10), le procédé comprenant les étapes consistant à :
recevoir des informations de diffusion incluant une valeur configurée d'un ensemble de ressources de commande ; et
déterminer un nombre de blocs de ressources et un nombre de symboles d'un ensemble de ressources de commande pour une recherche de cellule sur la base d'une première information, dans lequel la première information est spécifiée pour une première plage de fréquences, la première information associe la valeur configurée de l'ensemble de ressources de commande au nombre de blocs de ressources et au nombre de symboles de l'ensemble de ressources de commande, et la première plage de fréquences est 52,6 GHz à 71 GHz,
dans lequel la première information diffère d'une deuxième information, la deuxième information est spécifiée pour une deuxième plage de fréquences qui est 24,25 GHz à 52,6 GHz, et la deuxième information associe la valeur configurée de l'ensemble de ressources de commande au nombre de blocs de ressources et au nombre de symboles de l'ensemble de ressources de commande.

5. Système de communication comprenant :
une station de base (20) selon la revendication 3, et
un terminal (10) selon l'une des revendications 1 à 2.
